# EUROPEAN PATENT APPLICATION

(11) **EP 3 907 697 A1**
(43) Date of publication of application: **10.11.2021**
(21) Application number: 20913051.7
(22) Date of filing: 21.09.2020
(51) Int. Cl.: G06T 7/00

(54) **METHOD AND APPARATUS FOR ACQUIRING INFORMATION**

(30) Priority: 11.03.2020 CN 202010165825
(71) Applicant: BEIJING BAIDU NETCOM SCIENCE AND TECHNOLOGY CO., LTD., 100085 Beijing (CN)
(72) Inventor: SU, Ye, Beijing 100085 (CN); REN, Sike, Beijing 100085 (CN); NIE, Lei, Beijing 100085 (CN); HUANG, Feng, Beijing 100085 (CN)
(74) Representative: V.O.
(86) International application number: PCT/CN2020/116527
(87) International publication number: WO 2021/179565

(57) **Abstract**

Embodiments of the present disclosure provide a method and apparatus for obtaining information, relate to the technical field of cloud computing. A specific implementation of the method includes: obtaining at least one image feature from a to-be-inspected image, where the to-be-inspected image includes an image of a to-be-inspected item, and the image feature is used to represent surface feature information of the to-be-inspected item; and importing the to-be-inspected image and the at least one image feature into a pre-trained defect detection model to obtain defect information corresponding to the to-be-inspected item, where the defect detection model is obtained by training using a sample image, a sample image feature and sample defect information, and configured to represent a corresponding relationship between the to-be-inspected image and the at least one image feature. This implementation is beneficial to improving the accuracy of obtaining the defect information of the to-be-inspected item.

## Description

This application claims the priority of Chinese Patent Application No. 202010165825.4, titled "METHOD AND APPARATUS FOR OBTAINING INFORMATION", filed on March 11, 2020, the content of which is incorporated herein by reference in its entirety.

### TECHNICAL FIELD

Embodiments of the present disclosure relate to the field of computer technology, and specifically relate to a method and apparatus for obtaining information.

### BACKGROUND

With the development of science and technology, many items can be produced industrially on a large scale. In the process of producing items, there may be many factors causing defects in the items, which affect the quality of the items.

For this reason, two methods are generally used to inspect the quality of the items. The first is to inspect the quality of the items by technicians to check possible defects; and the second is to inspect the quality of the items through devices. However, the devices are set also based on the experience of the technicians, and the effects of detecting defects by the devices are basically the same as manual. The devices can detect a large quantity of items for a long time without resting.

### SUMMARY

Embodiments of the present disclosure provide a method and apparatus for obtaining information.

In a first aspect, embodiments of the present disclosure provide a method for obtaining information, and the method includes: obtaining at least one image feature from a to-be-inspected image, where the to-be-inspected image includes an image of a to-be-inspected item, and the image feature is used to represent surface feature information of the to-be-inspected item; and importing the to-be-inspected image and the at least one image feature into a pre-trained defect detection model to obtain defect information corresponding to the to-be-inspected item, where the defect detection model is obtained by training using a sample image, a sample image feature and sample defect information, and configured to represent a corresponding relationship between the to-be-inspected image and the at least one image feature.

In some embodiments, the obtaining at least one image feature from a to-be-inspected image includes: obtaining a reference feature of the to-be-inspected item, where the reference feature includes at least one of a color feature, a structural feature or a planar feature; and performing imaging processing on the to-be-inspected image in a set manner based on the reference feature to obtain the corresponding image feature, where the set manner includes at least one of color contrast enhancement, filtering or texture acquisition.

In some embodiments, the importing the to-be-inspected image and the at least one image feature into a pre-trained defect detection model to obtain defect information corresponding to the to-be-inspected item includes: importing the to-be-inspected image and the at least one image feature into a corresponding input channel of the defect detection model to obtain the defect information corresponding to the to-be-inspected item.

In some embodiments, the defect detection model is trained through following steps of: obtaining multiple sample information groups and sample defect information corresponding to each sample information group in the multiple sample information groups, where a sample information group includes a sample image and at least one sample image feature corresponding to the sample image; and using each sample information group in the multiple sample information groups as an input, and using the sample defect information corresponding to each sample information group in the multiple sample information groups as an output to train to obtain the defect detection model.

In some embodiments, the using each sample information group in the multiple sample information groups as an input, and using the sample defect information corresponding to each sample information group in the plurality of the sample information groups as an output to train to obtain the defect detection model includes: executing following training steps of: sequentially inputting each sample information group in the multiple sample information groups into an initialized defect detection model to obtain prediction defect information corresponding to each sample information group in the multiple sample information groups, comparing the prediction defect information corresponding to each sample information group in the multiple sample information groups with the sample defect information corresponding to each sample information group to obtain prediction accuracy of the initialized defect detection model, determining whether the prediction accuracy is greater than a pre-set accuracy threshold, and using, if the prediction accuracy is greater than the pre-set accuracy threshold, the initialized defect detection model as the trained defect detection model.

In some embodiments, the using each sample information group in the plurality of the sample information groups as an input, and using the sample defect information corresponding to each sample information group in the plurality of the sample information groups as an output to train to obtain the defect detection model includes: adjusting, in response to the prediction accuracy being not greater than the pre-set accuracy threshold, a parameter of the initialized defect detection model and continuing to execute the training steps.

In a second aspect, embodiments of the present disclosure provide an apparatus for obtaining information, and the apparatus includes: a feature obtaining unit configured to obtain at least one image feature from a to-be-inspected image, where the to-be-inspected image includes an image of a to-be-inspected item, and the image feature is used to represent surface feature information of the to-be-inspected item; and a defect information obtaining unit configured to import the to-be-inspected image and the at least one image feature into a pre-trained defect detection model to obtain defect information corresponding to the to-be-inspected item, where the defect detection model is obtained by training using a sample image, a sample image feature and sample defect information, and configured to represent a corresponding relationship between the to-be-inspected image and the at least one image feature.

In some embodiments, the feature obtaining unit includes: a reference feature obtaining subunit configured to obtain a reference feature of the to-be-inspected item, where the reference feature includes at least one of a color feature, a structural feature or a planar feature; and an image feature obtaining subunit configured to perform imaging processing on the to-be-inspected image in a set manner based on the reference feature to obtain the corresponding image feature, where the set manner includes at least one of color contrast enhancement, filtering or texture acquisition.

In some embodiments, the defect information obtaining unit includes: an information input subunit configured to import the to-be-inspected image and the at least one image feature into a corresponding input channel of the defect detection model to obtain the defect information corresponding to the to-be-inspected item.

In some embodiments, the apparatus includes a defect detection model training unit configured to train a defect detection model, and the defect detection model training unit includes: a sample obtaining subunit configured to obtain multiple sample information groups and sample defect information corresponding to each sample information group in the multiple sample information groups, where a sample information group includes a sample image and at least one sample image feature corresponding to the sample image; and a model training subunit configured to use each sample information group in the multiple sample information groups as an input, and use the sample defect information corresponding to each sample information group in the multiple sample information groups as an output to train to obtain the defect detection model.

In some embodiments, the model training subunit includes: a model training module configured to sequentially input each sample information group in the multiple sample information groups into an initialized defect detection model to obtain prediction defect information corresponding to each sample information group in the multiple sample information groups, compare the prediction defect information corresponding to each sample information group in the multiple sample information groups with the sample defect information corresponding to each sample information group to obtain prediction accuracy of the initialized defect detection model, determine whether the prediction accuracy is greater than a pre-set accuracy threshold, and use, if the prediction accuracy is greater than the pre-set accuracy threshold, the initialized defect detection model as the trained defect detection model.

In some embodiments, the model training subunit includes: a parameter adjustment module configured to adjust, in response to the prediction accuracy being not greater than the pre-set accuracy threshold, a parameter of the initialized defect detection model and return to the model training module.

In a third aspect, embodiments of the present disclosure provide an electronic device, including: one or more processors; and a memory storing one or more programs, where the one or more programs, when executed by the one or more processors, cause the one or more processors to implement the method for obtaining information according to the first aspect.

In a fourth aspect, embodiments of the present disclosure provide a computer readable medium storing a computer program, where the computer program, when executed by a processor, implements the method for obtaining information according to the first aspect.

According to the method and apparatus for obtaining information provided by embodiments of the present disclosure, the at least one image feature is first obtained from the to-be-inspected image, and then the to-be-inspected image and the at least one image feature are imported into the pre-trained defect detection model to obtain the defect information corresponding to the to-be-inspected item. In this way, it is beneficial to improving the accuracy of obtaining the defect information of the to-be-inspected item.

### BRIEF DESCRIPTION OF THE DRAWINGS

By reading the detailed description of nonlimiting embodiments with reference to the following accompanying drawings, other features, objects and advantages of the present disclosure will become more apparent.
Fig. 1 is an example system architecture diagram to which an embodiment of the present disclosure may be applied;
Fig. 2 is a flowchart of an embodiment of a method for obtaining information according to the present disclosure;
Fig. 3 is a schematic diagram of an application scenario of the method for obtaining information according to the present disclosure;
Fig. 4 is a flowchart of an embodiment of a defect detection model training method according to the present disclosure;
Fig. 5 is a schematic structural diagram of an embodiment of an apparatus for obtaining information according to the present disclosure; and
Fig. 6 is a schematic structural diagram of an electronic device adapted to implement embodiments of the present disclosure.

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

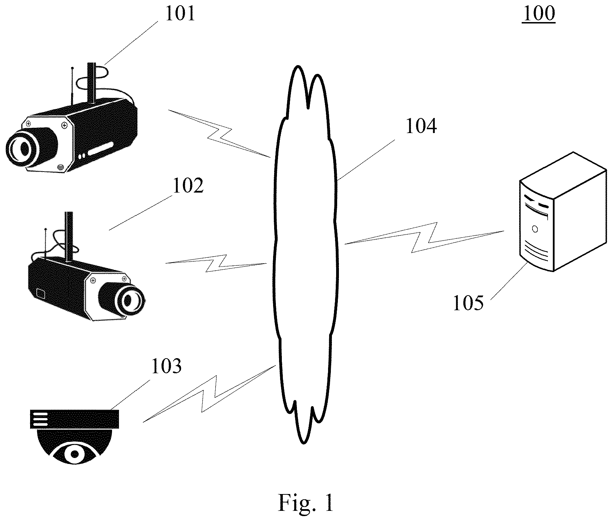

Fig. 1 shows an example system architecture 100 to which a method for obtaining information or an apparatus for obtaining information according to embodiments of the present disclosure may be applied.

As shown in Fig. 1, the system architecture 100 may include image capturing devices 101, 102, 103, a network 104 and a server 105. The network 104 serves as a medium for providing a communication link between the image capturing devices 101, 102, 103 and the server 105. The network 104 may include various types of connections, such as wired or wireless communication links, or optical fiber cables.

The image capturing devices 101, 102, 103 interact with the server 105 through the network 104 to receive or send messages. Various image processing applications, such as image capturing applications, image adjustment applications, image compression applications and image encryption applications, may be installed on the image capturing devices 101, 102, 103.

The image capturing devices 101, 102, 103 may be various electronic devices having a display and supporting image capturing, including a remote camera, a digital camera, a surveillance camera and the like, which is not specifically limited herein.

The server 105 may be a server providing various services, such as a defect detection server providing support for a to-be-inspected image transmitted from the image capturing devices 101, 102, 103. The defect detection server may perform processing, such as analysis on the received to-be-inspected image, and obtain defect information corresponding to the to-be-inspected image.

It should be noted that the method for obtaining information provided by embodiments of the present disclosure is generally executed by the server 105. Correspondingly, the apparatus for obtaining information is generally provided in the server 105.

It should be noted that the server may be hardware or software. When the server is hardware, the server may be implemented as a distributed server cluster composed of multiple servers, or as a single server; and when the server is software, the server may be implemented as multiple software pieces or software modules (such as for providing distributed services), or as a single software piece or software module, which is not specifically limited herein.

It should be appreciated that the number of the image capturing devices, the network, the server in Fig. 1 is merely illustrative. Any number of image capturing devices, networks, and servers may be provided according to actual requirements.

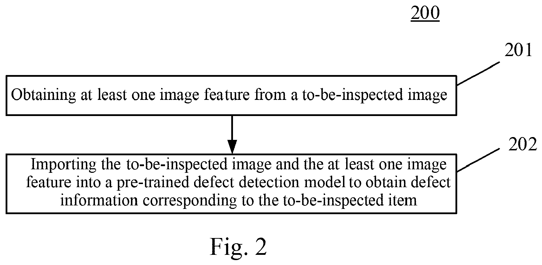

Further referring to Fig. 2, Fig. 2 shows a flow 200 of an embodiment of a method for obtaining information according to the present disclosure. The method for obtaining information includes the following steps 201 to 202.

Step 201 includes obtaining at least one image feature from a to-be-inspected image.

In this embodiment, an execution body of the method for obtaining information (such as the server 105 shown in Fig. 1) may receive the to-be-inspected image from the image capturing devices 101, 102, 103 through a wired connection or a wireless connection. The image capturing devices 101, 102, 103 in the present disclosure may be provided at multiple positions of an item production line to obtain to-be-inspected images for an item at links of the production. That is, the to-be-inspected image in the present disclosure includes an image of a to-be-inspected item. It should be noted that the wireless connection may include, but is not limited to, a 3G/4G connection, a WiFi connection, a Bluetooth connection, a WiMAX connection, a Zigbee connection, a UWB (Ultra Wideband) connection, and other wireless connections currently known or developed in the future.

In the process of detecting defects of items through devices in the existing technology, due to the shooting angle of the devices and the inability to manually touch the items, it is difficult for the devices to accurately detect the defects such as those that are not sensitive to light or require manual touch.

For this reason, after obtaining the to-be-inspected image, the present disclosure does not directly perform a detection on the to-be-inspected image to recognize a possible defect on the surface of the to-be-inspected item, but performs relevant processing on the to-be-inspected image to obtain at least one image feature from the to-be-inspected image, where the image feature is used to represent surface feature information of the to-be-inspected item.

In some alternative implementations of this embodiment, the obtaining the at least one image feature from the to-be-inspected image may include the following steps.

The first step includes obtaining a reference feature of the to-be-inspected item.

The execution body may first recognize the to-be-inspected item from the to-be-inspected image, and then obtain the reference feature of the corresponding to-be-inspected item from a data storage device such as a database by querying. The to-be-inspected item may be a notebook computer, a motherboard, a display, a silicon chip and the like. Therefore, different items for detection have their corresponding reference features. The reference feature may include at least one of a color feature, a structural feature, a planar feature (i.e., multiple sides of the to-be-inspected item), a material feature, a light sensing feature or the like. The reference feature may alternatively be other features, depending on an actual to-be-inspected item.

The second step includes performing imaging processing on the to-be-inspected image in a set manner based on the reference feature to obtain the corresponding image feature.

When capturing the to-be-inspected image, the image capturing devices 101, 102, 103 may obtain an image of the reference feature related to the to-be-inspected item. That is, the to-be-inspected image includes an image feature of the reference feature related to the to-be-inspected item. For different reference features, the execution body may process the to-be-inspected image in different manners to extract corresponding image features from the to-be-inspected image. The set manner may include at least one of color contrast enhancement, filtering or texture acquisition. In this way, the image features may be extracted in different manners with respect to the reference features of the to-be-inspected item, and defects (which may be, for example, texture features of the to-be-inspected item) that are not easily found by the naked eyes may be captured, which is beneficial to improving the accuracy and effectiveness of obtaining the defect information.

Step 202 includes importing the to-be-inspected image and the at least one image feature into a pre-trained defect detection model to obtain defect information corresponding to the to-be-inspected item.

After obtaining the image feature, the execution body may import the to-be-inspected image and the at least one image feature into the pre-trained defect detection model. It can be seen from the above description that different to-be-inspected items have different reference features and image features, and therefore, the defect detection model is a model capable of processing a to-be-inspected image and a corresponding image feature. The defect detection model detects the defect information of the to-be-inspected item in the to-be-inspected image through the to-be-inspected image and the image feature. In this way, the accuracy of obtaining the defect information is improved. The defect detection model may be obtained by training using a sample image, a sample image feature and sample defect information, and may be configured to represent a corresponding relationship between the to-be-inspected image and the at least one image feature.

In some alternative implementations of this embodiment, the importing the to-be-inspected image and the at least one image feature into the pre-trained defect detection model to obtain the defect information corresponding to the to-be-inspected item may include: importing the to-be-inspected image and the at least one image feature into a corresponding input channel of the defect detection model to obtain the defect information corresponding to the to-be-inspected item.

The defect detection model in the present disclosure may have multiple input channels, and a different information piece may be input into each of input channels. After being input to the defect detection model, the different input information piece may be processed in a corresponding network structure or corresponding calculation unit of the defect detection model, so that fusion of multiple image features and the to-be-inspected image is realized, which is beneficial to improving the accuracy and effectiveness of obtaining the defect information.

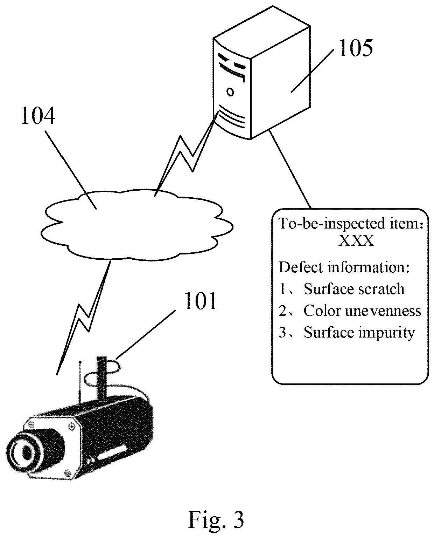

Further referring to Fig. 3, Fig. 3 is a schematic diagram of an application scenario of the method for obtaining information according to this embodiment. In the application scenario of Fig 3, the image capturing device 101 transmits a captured to-be-inspected image including an image of a to-be-inspected item XXX to the server 105 through the network 104. The server 105 obtains at least one image feature from the to-be-inspected image, and then imports the to-be-inspected image and the at least one image feature into a defect detection model to obtain defect information corresponding to the to-be-inspected item, which may be: to-be-inspected item: XXX; and defect information: 1. surface scratch; 2. color unevenness; 3. surface impurity.

According to the method for obtaining information provided by the embodiment of the present disclosure, the at least one image feature is first obtained from the to-be-inspected image, and then the to-be-inspected image and the at least one image feature are imported into the pre-trained defect detection model to obtain the defect information corresponding to the to-be-inspected item. In this way, it is beneficial to improving the accuracy of obtaining the defect information of the to-be-inspected item.

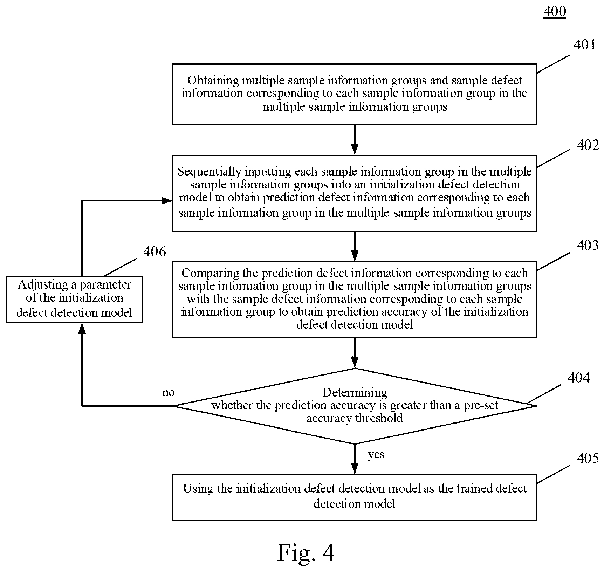

Further referring to Fig. 4, Fig. 4 shows a flow 400 of an embodiment of a defect detection model training method. The flow 400 of the defect detection model training method includes the following steps 401 to 406.

Step 401 includes obtaining multiple sample information groups and sample defect information corresponding to each sample information group in the multiple sample information groups.

In this embodiment, an execution body of the defect detection model training method (such as the server 105 shown in Fig.1) may obtain the multiple sample information groups and the sample defect information corresponding to each sample information group in the multiple sample information groups.

In this embodiment, the execution body may obtain multiple sample information groups and present the multiple sample information groups for those skilled in the art, and those skilled in the art may label sample defect information for each sample information group in the multiple sample information groups based on experience. A sample information group includes a sample image and at least one sample image feature corresponding to the sample image.

In some alternative implementations of this embodiment, the sample image feature is obtained by the following step of: performing feature extraction on the sample image in the set manner.

The execution body may extract at least one image feature from the sample image in the set manner. It should be noted that if there is a corresponding image feature in the sample image, the sample image feature may be extracted in a corresponding set manner; and if there is no corresponding image feature in the sample image, the sample image feature may not be extracted in the corresponding set manner. Therefore, a number of the sample image features is smaller than or equal to a number of the set manners.

Step 402 includes sequentially inputting each sample information group in the multiple sample information groups into an initialized defect detection model to obtain prediction defect information corresponding to each sample information group in the multiple sample information groups.

In this embodiment, based on the multiple sample information groups obtained in the step 401, the execution body may sequentially input the sample image and the at least one sample image feature corresponding to the sample image included in each sample information group in the multiple sample information groups into a different input channel of the initialized defect detection model to obtain the prediction defect information corresponding to each sample information group in the multiple sample information groups. Here, the execution body may input each sample information group from an input side of the initialized defect detection model, and the sample information group is sequentially processed by a parameter of each layer in the initialized defect detection model, and the information output from an output side is the prediction defect information corresponding to the sample information group. The initialized defect detection model may be an untrained deep learning model or a partly trained deep learning model, each layer of which is provided with an initialized parameter, and the initialized parameter may be continuously adjusted during the training process of the initialized defect detection model. Each sample image feature participates in data processing in a corresponding network structure or calculation unit to achieve organic fusion of multiple sample image features and a sample image.

Step 403 includes comparing the prediction defect information corresponding to each sample information group in the multiple sample information groups with the sample defect information corresponding to each sample information group to obtain prediction accuracy of the initialized defect detection model.

In this embodiment, based on the prediction defect information corresponding to each sample information group in the multiple sample information groups obtained in the step 402, the execution body may compare the prediction defect information corresponding to each sample information group in the multiple sample information groups with the sample defect information corresponding to each sample information group to obtain the prediction accuracy of the initialized defect detection model. Specifically, if prediction defect information corresponding to a sample information group is the same as or similar to sample defect information corresponding to the sample information group, the prediction of the initialized defect detection model is correct; and if prediction defect information corresponding to a sample information group is not the same as or not similar to sample defect information corresponding to the sample information group, the prediction of the initialized defect detection model is incorrect. Here, the execution body may calculate the ratio of the number of correct predictions to the total number of samples, and use the ratio as the prediction accuracy of the initialized defect detection model.

Step 404 includes determining whether the prediction accuracy is greater than a pre-set accuracy threshold.

In this embodiment, based on the prediction accuracy of the initialized defect detection model obtained in the step 403, the execution body may compare the prediction accuracy of the initialized defect detection model with the pre-set accuracy threshold. If the prediction accuracy is greater than the pre-set accuracy threshold, step 405 is executed; and if the prediction accuracy is not greater than the pre-set accuracy threshold, step 406 is executed.

Step 405 includes using the initialized defect detection model as the trained defect detection model.

In this embodiment, when the prediction accuracy is greater than the pre-set accuracy threshold, the training of the defect detection model is completed. In this case, the execution body may use the initialized defect detection model as the trained defect detection model.

Step 406 includes adjusting a parameter of the initialized defect detection model.

In this embodiment, when the prediction accuracy is not greater than the pre-set accuracy threshold, the execution body may adjust the parameter of the initialized defect detection model and return to execute the step 402 until a deep learning model capable of representing the corresponding relationship between the to-be-inspected image and the at least one image feature is trained.

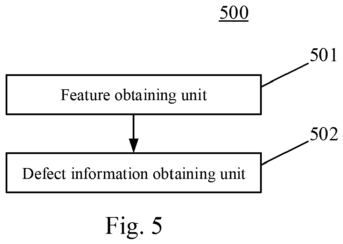

Further referring to Fig. 5, as an implementation of the method shown in the above figures, the present disclosure provides an embodiment of an apparatus for obtaining information. The embodiment of the apparatus corresponds to the embodiment of the method shown in Fig. 2, and the apparatus is particularly applicable to various electronic devices.

As shown in Fig. 5, the apparatus 500 for obtaining information of this embodiment may include: a feature obtaining unit 501 and a defect information obtaining unit 502. The feature obtaining unit 501 is configured to obtain at least one image feature from a to-be-inspected image, where the to-be-inspected image includes an image of a to-be-inspected item, and the image feature is used to represent surface feature information of the to-be-inspected item; and the defect information obtaining unit 502 is configured to import the to-be-inspected image and the at least one image feature into a pre-trained defect detection model to obtain defect information corresponding to the to-be-inspected item, where the defect detection model is obtained by training using a sample image, a sample image feature and sample defect information, and configured to represent a corresponding relationship between the to-be-inspected image and the at least one image feature.

In some alternative implementations of this embodiment, the feature obtaining unit 501 may include: a reference feature obtaining subunit (not shown) and an image feature obtaining subunit (not shown). The reference feature obtaining subunit is configured to obtain a reference feature of the to-be-inspected item, where the reference feature includes at least one of a color feature, a structural feature or a planar feature; and the image feature obtaining subunit is configured to perform imaging processing on the to-be-inspected image in a set manner based on the reference feature to obtain the corresponding image feature, where the set manner includes at least one of color contrast enhancement, filtering or texture acquisition.

In some alternative implementations of this embodiment, the defect information obtaining unit 502 may include: an information input subunit (not shown) configured to import the to-be-inspected image and the at least one image feature into a corresponding input channel of the defect detection model to obtain the defect information corresponding to the to-be-inspected item.

In some alternative implementations of this embodiment, the apparatus 500 for obtaining information may include a defect detection model training unit (not shown) configured to train a defect detection model, and the defect detection model training unit may include: a sample obtaining subunit (not shown) and a model training subunit (not shown). The sample obtaining subunit is configured to obtain multiple sample information groups and sample defect information corresponding to each sample information group in the multiple sample information groups, where a sample information group includes a sample image and at least one sample image feature corresponding to the sample image; and the model training subunit is configured to use each sample information group in the multiple sample information groups as an input, and use the sample defect information corresponding to each sample information group in the multiple sample information groups as an output to train to obtain the defect detection model.

In some alternative implementations of this embodiment, the model training subunit may include: a model training module (not shown) configured to sequentially input each sample information group in the plurality of the sample information groups into an initialized defect detection model to obtain prediction defect information corresponding to each sample information group in the plurality of the sample information groups, compare the prediction defect information corresponding to each sample information group in the plurality of the sample information groups with the sample defect information corresponding to the each sample information group to obtain prediction accuracy of the initialized defect detection model, determine whether the prediction accuracy is greater than a pre-set accuracy threshold, and use, if the prediction accuracy is greater than the pre-set accuracy threshold, the initialized defect detection model as the trained defect detection model.

In some alternative implementations of this embodiment, the model training subunit may include: a parameter adjustment module (not shown) configured to adjust, in response to the prediction accuracy being not greater than the pre-set accuracy threshold, a parameter of the initialized defect detection model and return to the model training module.

This embodiment further provides an electronic device, including: one or more processors; and a memory storing one or more programs, where the one or more programs, when executed by the one or more processors, cause the one or more processors to execute the method for obtaining information.

This embodiment further provides a computer readable medium storing a computer program, where the computer program, when executed by a processor, implements the method for obtaining information.

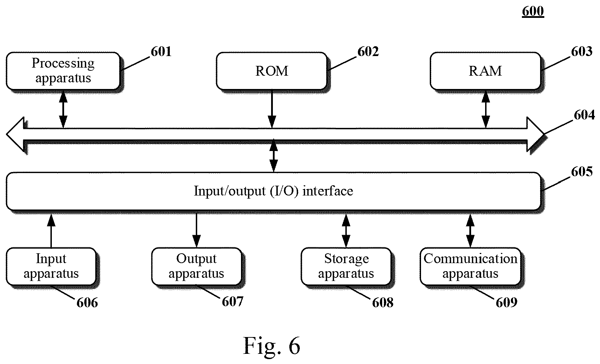

Referring to Fig. 6, Fig. 6 shows a schematic structural diagram of a computer system 600 of an electronic device (such as the server 105 in Fig. 1) adapted to implement the embodiments of the present disclosure. The electronic device shown in Fig. 6 is merely an example and should not be construed as limiting the functionality and use scope of the embodiments of the present disclosure.

As shown in Fig. 6, the electronic device 600 may include a processing apparatus 601 (such as a central processing unit and a graphic processor), which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Generally, the following apparatuses are connected to the I/O interface 605: an input apparatus 606 including a touch screen, a touchpad, a keyboard, a mouse, a camera, a microphone, an accelerometer, a gyroscope and the like; an output apparatus 607 including a liquid crystal display (LCD), a speaker, a vibrator and the like; a storage apparatus 608 including a magnetic tap, a hard disk and the like; and a communication apparatus 609. The communication apparatus 609 may allow the electronic device 600 to perform wireless or wired communication with other devices to exchange data. Although Fig. 6 shows the electronic device 600 having various apparatuses, it should be appreciated that it is not required to implement or provide all the shown apparatuses, and it may alternatively be implemented or provided with more or fewer apparatuses. Each block shown in Fig. 6 may represent one apparatus or multiple apparatuses according to requirements.

In particular, according to the embodiments of the present disclosure, the process described above with reference to the flowchart may be implemented as a computer software program. For example, the embodiments of the present disclosure include a computer program product, which includes a computer program carried on a computer readable medium. The computer program includes program codes for executing the method shown in the flowchart. In such an embodiment, the computer program may be downloaded and installed from a network via the communication apparatus 609, or may be installed from the storage apparatus 608, or may be installed from the ROM 602. The computer program, when executed by the processing apparatus 601, implements the above functionalities as defined by the method of the embodiments of the present disclosure.

It should be noted that the computer readable medium described by the embodiments of the present disclosure may be computer readable signal medium or computer readable storage medium or any combination of the above two. The computer readable storage medium may be, but is not limited to: an electric, magnetic, optical, electromagnetic, infrared, or semiconductor system, an apparatus, an element, or any combination of the above. A more specific example of the computer readable storage medium may include but is not limited to: an electrical connection with one or more wires, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the embodiments of the present disclosure, the computer readable storage medium may be any physical medium containing or storing programs which can be used by or in combination with an instruction execution system, an apparatus or an element. In the embodiments of the present disclosure, the computer readable signal medium may include a data signal in the base band or propagating as a part of a carrier, in which computer readable program codes are carried. The propagating signal may be various forms, including but not limited to: an electromagnetic signal, an optical signal or any suitable combination of the above. The computer readable signal medium may be any computer readable medium except for the computer readable storage medium. The computer readable signal medium is capable of transmitting, propagating or transferring programs for use by or in combination with an instruction execution system, an apparatus or an element. The program codes contained on the computer readable medium may be transmitted with any suitable medium including but not limited to: a wire, an optical cable, RF (Radio Frequency), or any suitable combination of the above.

The above computer readable medium may be included in the electronic device; or may alternatively be present alone and not assembled into the electronic device. The computer readable medium carries one or more programs that, when executed by the electronic device, cause the electronic device to: obtain at least one image feature from a to-be-inspected image, where the to-be-inspected image includes an image of a to-be-inspected item, and the image feature is used to represent surface feature information of the to-be-inspected item; and import the to-be-inspected image and the at least one image feature into a pre-trained defect detection model to obtain defect information corresponding to the to-be-inspected item, where the defect detection model is obtained by training using a sample image, a sample image feature and sample defect information, and configured to represent a corresponding relationship between the to-be-inspected image and the at least one image feature.

A computer program code for executing operations of the embodiments of the present disclosure may be written in one or more programming languages or a combination thereof. The programming languages include object-oriented programming languages, such as Java, Smalltalk or C++, and also include conventional procedural programming languages, such as "C" language or similar programming languages. The program code may be completely executed on a user computer, partially executed on a user computer, executed as a separate software package, partially executed on a user computer and partially executed on a remote computer, or completely executed on a remote computer or server. In a case involving a remote computer, the remote computer may be connected to a user computer through any kind of network, including a local area network (LAN) or a wide area network (WAN), or may be connected to an external computer (for example, connected through Internet using an Internet service provider).

The flowcharts and block diagrams in the accompanying drawings show architectures, functions and operations that may be implemented according to the systems, methods and computer program products of the various embodiments of the present disclosure. In this regard, each of the blocks in the flowcharts or block diagrams may represent a module, a program segment, or a code portion, the module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flowcharts as well as a combination of blocks in the block diagrams and/or flowcharts may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor, for example, described as: a processor, including a feature obtaining unit and a defect information obtaining unit, where the names of these units do not constitute a limitation to such units themselves in some cases. For example, the feature obtaining unit may alternatively be described as "a unit of obtaining multiple image features of a to-be-inspected item from a to-be-inspected image".

The above description only provides an explanation of the preferred embodiments of the present disclosure and the technical principles used. It should be appreciated by those skilled in the art that the inventive scope involved in the present disclosure is not limited to the technical solutions formed by the particular combinations of the above technical features. The inventive scope should also cover other technical solutions formed by any combinations of the above technical features or equivalent features thereof without departing from the concept of the present disclosure, such as technical solutions formed through the above features and technical features having similar functions provided (or not provided) in the present disclosure being replaced with each other.

## Claims

1. A method for obtaining information, the method comprising:
obtaining at least one image feature from a to-be-inspected image, wherein the to-be-inspected image comprises an image of a to-be-inspected item, and the image feature is used to represent surface feature information of the to-be-inspected item; and
importing the to-be-inspected image and the at least one image feature into a pre-trained defect detection model to obtain defect information corresponding to the to-be-inspected item, wherein the defect detection model is obtained by training using a sample image, a sample image feature and sample defect information, and configured to represent a corresponding relationship between the to-be-inspected image and the at least one image feature.

2. The method according to claim 1, wherein obtaining the at least one image feature from the to-be-inspected image, comprises:
obtaining a reference feature of the to-be-inspected item, wherein the reference feature comprises at least one of a color feature, a structural feature or a planar feature; and
performing imaging processing on the to-be-inspected image in a set manner based on the reference feature to obtain a corresponding image feature, wherein the set manner comprises at least one of color contrast enhancement, filtering or texture acquisition.

3. The method according to claim 1, wherein importing the to-be-inspected image and the at least one image feature into the pre-trained defect detection model to obtain the defect information corresponding to the to-be-inspected item, comprises:
importing the to-be-inspected image and the at least one image feature into a corresponding input channel of the defect detection model to obtain the defect information corresponding to the to-be-inspected item.

4. The method according to claim 1, wherein the defect detection model is trained through following steps of:
obtaining a plurality of sample information groups and sample defect information corresponding to each sample information group in the plurality of the sample information groups, wherein the sample information group comprises a sample image and at least one sample image feature corresponding to the sample image; and
using each sample information group in the plurality of the sample information groups as an input, and using the sample defect information corresponding to each sample information group in the plurality of the sample information groups as an output to train to obtain the defect detection model.

5. The method according to claim 4, wherein using each sample information group in the plurality of the sample information groups as the input, and using the sample defect information corresponding to each sample information group in the plurality of the sample information groups as the output to train to obtain the defect detection model, comprises:
executing following training steps of: sequentially inputting each sample information group in the plurality of the sample information groups into an initialized defect detection model to obtain prediction defect information corresponding to each sample information group in the plurality of the sample information groups, comparing the prediction defect information corresponding to each sample information group in the plurality of the sample information groups with the sample defect information corresponding to the each sample information group to obtain prediction accuracy of the initialized defect detection model, determining whether the prediction accuracy is greater than a pre-set accuracy threshold, and using, if the prediction accuracy is greater than the pre-set accuracy threshold, the initialized defect detection model as the trained defect detection model.

6. The method according to claim 5, wherein using each sample information group in the plurality of the sample information groups as the input, and using the sample defect information corresponding to each sample information group in the plurality of the sample information groups as the output to train to obtain the defect detection model, comprises:
adjusting, in response to the prediction accuracy being not greater than the pre-set accuracy threshold, a parameter of the initialized defect detection model and continuing to execute the training steps.

7. An apparatus for obtaining information, the apparatus comprising:
a feature obtaining unit, configured to obtain at least one image feature from a to-be-inspected image, wherein the to-be-inspected image comprises an image of a to-be-inspected item, and the image feature is used to represent surface feature information of the to-be-inspected item; and
a defect information obtaining unit, configured to import the to-be-inspected image and the at least one image feature into a pre-trained defect detection model to obtain defect information corresponding to the to-be-inspected item, wherein the defect detection model is obtained by training using a sample image, a sample image feature and sample defect information, and configured to represent a corresponding relationship between the to-be-inspected image and the at least one image feature.

8. The apparatus according to claim 7, wherein the feature obtaining unit comprises:
a reference feature obtaining subunit, configured to obtain a reference feature of the to-be-inspected item, wherein the reference feature comprises at least one of a color feature, a structural feature or a planar feature; and
an image feature obtaining subunit, configured to perform imaging processing on the to-be-inspected image in a set manner based on the reference feature to obtain the corresponding image feature, wherein the set manner comprises at least one of color contrast enhancement, filtering or texture acquisition.

9. The apparatus according to claim 7, wherein the defect information obtaining unit comprises:
an information input subunit, configured to import the to-be-inspected image and the at least one image feature into a corresponding input channel of the defect detection model to obtain the defect information corresponding to the to-be-inspected item.

10. The apparatus according to claim 7, wherein the apparatus comprises a defect detection model training unit, configured to train a defect detection model, and the defect detection model training unit comprises:
a sample obtaining subunit, configured to obtain a plurality of sample information groups and sample defect information corresponding to each sample information group in the plurality of the sample information groups, wherein a sample information group comprises a sample image and at least one sample image feature corresponding to the sample image; and
a model training subunit, configured to use each sample information group in the plurality of the sample information groups as an input, and use the sample defect information corresponding to each sample information group in the plurality of the sample information groups as an output to train to obtain the defect detection model.

11. The apparatus according to claim 10, wherein the model training subunit comprises:
a model training module, configured to sequentially input each sample information group in the plurality of the sample information groups into an initialized defect detection model to obtain prediction defect information corresponding to each sample information group in the plurality of the sample information groups, compare the prediction defect information corresponding to each sample information group in the plurality of the sample information groups with the sample defect information corresponding to the each sample information group to obtain prediction accuracy of the initialized defect detection model, determine whether the prediction accuracy is greater than a pre-set accuracy threshold, and use, if the prediction accuracy is greater than the pre-set accuracy threshold, the initialized defect detection model as the trained defect detection model.

12. The apparatus according to claim 11, wherein the model training subunit comprises:
a parameter adjustment module, configured to adjust, in response to the prediction accuracy being not greater than the pre-set accuracy threshold, a parameter of the initialized defect detection model and return to the model training module.

13. An electronic device, comprising:
one or more processors; and
a memory storing one or more programs,
wherein the one or more programs, when executed by the one or more processors, cause the one or more processors to execute the method according to any one of claims 1 to 6.

14. A computer readable medium storing a computer program, wherein the computer program, when executed by a processor, implements the method according to any one of claims 1 to 6.
